# EUROPÄISCHE PATENTSCHRIFT

(11) **EP 2 864 375 B1**
(45) Veröffentlichungstag und Bekanntmachung des Hinweises auf die Patenterteilung: **03.01.2018**
(21) Anmeldenummer: 13731131.2
(22) Anmeldetag: 24.06.2013
(51) Int. Cl.: C08F 12/08, C08F 4/48

(54) **VERFAHREN ZUR HERSTELLUNG VON POLYMEREN AUS VINYLAROMATEN SOWIE VON VINYLAROMAT-DIEN-BLOCKCOPOLYMEREN**
METHOD FOR PRODUCING POLYMERS OF VINYL AROMATICS, AS WELL AS VINYL AROMATIC-DIENE BLOCK COPOLYMERS
PROCÉDÉ DE FABRICATION DE POLYMÈRES DE COMPOSÉS VINYLAROMATIQUES ET DE COPOLYMÈRES SÉQUENCÉS DE COMPOSÉS VINYLAROMATIQUES ET DE DIÈNES

(30) Priorität: 26.06.2012 EP 12173528
(43) Veröffentlichungstag der Anmeldung: 29.04.2015
(73) Patentinhaber: INEOS Styrolution Europe GmbH, 60325 Frankfurt am Main (DE)
(72) Erfinder: KNOLL, Konrad, 68199 Mannheim (DE); DARDIN, Ulrike, 69514 Laudenbach (DE)
(74) Vertreter: Jacobi, Markus Alexander
(86) Internationale Anmeldenummer: PCT/EP2013/063097
(87) Internationale Veröffentlichungsnummer: WO 2014/001234

(56) Entgegenhaltungen:
- DE-A1-102005 038 037
- US-A1- 2011 263 794
- US-B1- 6 444 767

## Beschreibung

Die vorliegende Erfindung betrifft ein Verfahren zur Herstellung von Polymeren aus Vinylaromaten sowie von Vinylaromat-Dien-Blockcopolymeren mit Hilfe eines modifizierten n-Alkyllithiuminitiators und dessen Verwendung als Initiator für die anionische Polymerisation.

Blockcopolymere von Vinylaromaten (z.B. Styrol) und Dienen (z.B. Butadien) sind Copolymere aus mehreren aneinandergereihten oder sonst wie verknüpften Polymermolekül-Bereichen (sog. Blöcken), die in sich mehr oder weniger einheitlich aufgebaut sind. Sie können je nach Struktur und Gehalt an Dienmonomeren - bei einer bestimmten Temperatur - insgesamt elastomere, d.h. gummielastische Eigenschaften oder steife, nicht-gummielastische Eigenschaften haben, d.h. sie verhalten sich nach außen hin insgesamt entweder gummielastisch, ähnlich wie ein Polydien und haben z.B. als sog. thermoplastische Elastomere Bedeutung, oder wie transparente, zäh-steife Styrolpolymere. Es ist üblich, in Anlehnung an die Bezeichnungen beim schlagzäh modifizierten Polystyrol diejenigen Molekülteile, die das gummielastische Verhalten bestimmen, als Weichphase und die starren Molekülteile (den reinen Polystyrolanteil) als Hartphase zu bezeichnen. Im Gegensatz dazu können rein statistisch aufgebaute Styrol-Dien-Copolymere, sogenannte SB-Rubber, nicht wie Thermoplaste verarbeitet werden, sondern müssen wie gewöhnliche Dienpolymere zum Gebrauch vulkanisiert, das heißt vernetzt werden, was ihre Verarbeitungszeit stark verlängert.
Aus der US-A 3,992,483 ist die notwendige Aktivierung von primären Lithiumalkyl-Initiatoren, speziell des reaktionsträgeren n-BuLi (n-Butyllithium), für die anionische Polymerisation von monovinylaromatischen Verbindungen, wie Styrol in Cyclohexan, unter Verwendung eines 1,1-Dialkylethylen-Promotors, wie beispielsweise 2-Methyl-1-penten oder Isobuten bekannt. In der Schrift ist auch dargelegt, dass eine breite Molmassenverteilung, wie sie bei der n-BuLi-initiierten Styrolpolymerisation ohne Aktivator auftritt, zu schlechten mechanischen Eigenschaften führt. Der Nachteil dieses Verfahrens besteht in den relativ großen benötigten Mengen an Aktivator, die als gängigem Bereich mit der 150 bis 1000-fachen Masse bezogen auf Alkyllithium angegeben werden. Bei der Rückführung und destillativen Aufreinigung des Lösungsmittels, üblicherweise Cyclohexan, muss es abgetrennt werden. Ein weiterer gravierender Nachteil besteht darin, dass es die übliche Siedekühlung zwischen den einzelnen Polymerisationsschritten wegen des niedrigen Siedepunkts stört.

US 6,444,767 B1 betrifft ein Verfahren zur Herstellung von Vinylaromat-Homo- oder Vinylaromat-Dien-Copolymeren, wobei die anionische Polymerisation in Gegenwart einer Initiatorkombination aus Alkalimetall-, Magnesium- und Aluminiumorganylen stattfindet. Als Alkalimetallorganyl werden u.a. n-, sec- und tert-Butyllithium und Butadienyllithium genannt.

DE 10 2005 038037 A1 betrifft ein kontinuierliches Verfahren zur Herstellung Styrolpolymeren durch anionische Sprühpolymerisation. Als geeignete Initiatoren werden Alkalimetallorganyle wie u.a. n-, sec- und tert-Butyllithium sowie auch Butadienyllithium genannt. Bevorzugt wird sec- Butyllithium eingesetzt. Ferner können auch Reaktionsprodukte, sog. Makroinitiatoren, der Alkali oder Erdalkali-Verbindungen mit Butadien (z.B. Polybutadienyllithium) als Initiatoren eingesetzt werden.

US 2011/0263794 A1 beschreibt die Herstellung von endständig funktionalisierten Polymeren, insbesondere Dien-Vinylaromat-Blockcopolymere, durch anionische Polymerisation. Als Initiatoren werden Organolithiumverbindungen, insbesondere n-BuLi, eingesetzt.

Aus der EP-A 242 612 ist die sequentielle anionische Polymerisation von vorzugsweise Styrol und Butadien durch Initiierung mit n-Butyllithium in Gegenwart von geringen Mengen THF [= Tetrahydrofuran] (0,01-1 Gew.-%) bekannt. Der Nachteil dieses Verfahrens besteht in einer deutlichen Erhöhung von 1,2-Verknüpfungen um mindestens 3-5% bei der anschließenden Butadienpolymerisation, die zu einer höheren Glasübergangstemperatur, d.h. schlechteren Elastomereigenschaften und einer erhöhten Oxidations- und Vernetzungsempfindlichkeit führt.

Aus der WO-A-95/35335 ist die Herstellung thermoplastischer Elastomere mit sec.-Butyllithium als Initiator in Cyclohexan bekannt. Die Styrolpolymerisation ergibt unter diesen Bedingungen die gewünschten, mechanisch vorteilhaften engverteilten lebenden Polymere, jedoch ist sec.-Butyllithium teurer als n-BuLi und vor allem bei Zimmertemperatur nicht lagerstabil. Es bildet unter Freisetzung von Buten einen pyrophoren Lithiumhydrid-Schlamm, der sich bei Luftkontakt spontan entzündet.

Der vorliegenden Erfindung lag daher die Aufgabe zugrunde, den zuvor genannten Nachteilen abzuhelfen.

Demgemäß wurde ein neues und verbessertes Verfahren zur Herstellung von Polymeren aus Vinylaromaten, sowie von Vinylaromat-Dien-Blockcopolymeren gefunden.

Gegenstand der Erfindung ist ein Verfahren zur Herstellung von Vinylaromat- Blockcopolymeren durch anionische Polymerisation, dadurch gekennzeichnet, dass zur Polymerisation eines Vinylaromaten ein modifizierter n-Alkyllithium-Initiator eingesetzt wird, welcher durch Umsetzung von n-Alkyllithium, gelöst in einem inerten Lösungsmittel, mit einem Dien im Molverhältnis von 1:1 bis 1:10 bei einer Temperatur von -20 bis 100°C erhältlich ist.

Unter einem modifizierten Alkyllithium-Initiator ist erfindungsgemäß ein Alkyllithium-Initiator im Allgemeinen enthaltend 1 bis 10, bevorzugt 1 bis 5, und besonders bevorzugt 1 bis 3, einpolymerisierte Monomereinheiten eines Diens zu verstehen.

Zur Herstellung des erfindungsgemäß eingesetzten modifizierten Alkyllithium-Initiators eignen sich die folgenden Diene: 1,3-Diene, bevorzugt 1,3-Butadien, Isopren, 2,3-Dimethylbutadien und/oder 1,3-Pentadien, besonders bevorzugt 1,3-Butadien. Als n-Alkyllithium eignet sich C₁-C₂₂-Alkyllithium, bevorzugt C₄-C₈-Alkyllithium, besonders bevorzugt n-Butyllithium.

Die Umsetzung des Diens mit n-Alkyllithium kann bevorzugt in Gegenwart eines inerten Lösungsmittels durchgeführt werden.

Die Umsetzung des Diens mit n-Alkyllithium kann ohne Zusatz eines Aktivators durchgeführt werden. Unter Aktivatoren werden in diesem Zusammenhang polare aprotische Verbindungen verstanden wie Ether (z. B. THF) oder tertiäre Amine (z.B. Tributylamin, Pyridin).

n-Alkyllithium wird als Lösung von n-Alkyllithium in einem inerten Lösungsmittel eingesetzt, welche üblicherweise eine Konzentration von 0,1 bis 20 Gew.-%, bevorzugt 1 bis 15 Gew.-%, besonders bevorzugt 5 bis 13 Gew.-% aufweist. Beispielsweise liegen käuflich erhältliche n-Butyllithiumlösungen im Allgemeinen als 12 Gew.-%ige Lösungen vor.

Zur Herstellung des in dem erfindungsgemäßen Verfahren eingesetzten modifizierten Alkyllithium-Initiators ist es vorteilhaft die n-Alkyllithiumlösung, gegebenenfalls unter Zusatz von weiterem inerten Lösungsmittel, vorzulegen und anschließend bei Temperaturen von -20 bis 100°C, bevorzugt 20 bis 80°C, besonders bevorzugt 35 bis 75°C, insbesondere 50 bis 75°C, und einem Druck von 0,5 bis 100 bar, bevorzugt 1 bis 10 bar, besonders bevorzugt 2 bis 5 bar, das Dien, gegebenenfalls unter Zusatz eines inerten Lösungsmittels, zuzugeben.

Die Umsetzung erfolgt in der Regel unter Inertgasatmosphäre. Es ist weiterhin vorteilhaft, für eine schnelle Durchmischung der Reaktionsmischung mit Hilfe eines schnelllaufenden Rührers wie z. B. einem Propellerrührer zu sorgen. Ebenfalls geeignet sind kontinuierlich durchflossene Mischkammern ohne bewegte Teile, in die die beiden Reaktionskomponenten unter Druck so eingedüst werden, dass es zu einer schnellen Verwirbelung und Durchmischung kommt.

Als inerte Lösungsmittel eignen sich beispielsweise aliphatische und/oder aromatische Kohlenwasserstoffe, z.B. C₅- bis C₂₀-Alkan wie n-Pentan, iso-Pentan, n-Hexan, iso-Hexan, Heptan, Oktan oder Isooktan einem C₄- bis C₂₀-Cycloalkan wie Cyclobutan, Cyclopentan, Cyclohexan, Cycloheptan, Cyclooctan, Methylcyclohexan und Dekalin, Aromaten und Alkylaromaten wie Benzol, Toluol, ortho-, meta- und para-Xylol, Ethylbenzol, n- und Isopropylbenzol, Tertiärbutylbenzol, Naphthalin, Methylnaphthalin und Tetralin sowie deren Gemische. Bevorzugt wird Cyclohexan oder eine Mischung von Cyclohexan und n-Hexan eingesetzt. Weiterhin bevorzugt sind Mischungen von Cycclohexan mit einem inerten Lösungsmittel dessen Schmelzpunkt < 4°C ist.

Die inerten Lösungsmittel, die für die n-Alkyllithiumlösung sowie zu deren weiterer Verdünnung oder zur Verdünnung des Diens verwendet werden, können gleich oder unterschiedlich, bevorzugt gleich sein.

Die Umsetzung wird bevorzugt unter Inertgasatmosphäre durchgeführt. Als Inertgase eignen sich Stickstoff, Edelgase wie Argon, Helium, Neon, Krypton, Xenon oder Kohlenwasserstoffe wie Methan, Ethan, Propan, Butan oder Wasserstoff, bevorzugt Stickstoff oder Argon, besonders bevorzugt Stickstoff.

Das Volumenverhältnis von inertem Lösungsmittel zur n-Alkyllithiumlösung beträgt in der Regel 0:1 bis 10:1, bevorzugt 0,1:1 bis 8:1, besonders bevorzugt 0,5:1 bis 2:1, insbesondere 1:1.

Das Volumenverhältnis von inertem Lösungsmittel zu Dien beträgt in der Regel 0:1 bis 10:1, bevorzugt 0,1:1 bis 8:1, besonders bevorzugt 0,5:1 bis 2:1, insbesondere 1:1.

Bevorzugt wird der üblichen zuvor oben beschriebenen n-Alkyllithiumlösung kein zusätzliches inertes Lösungsmittel zugesetzt.

Falls kein zusätzliches inertes Lösungsmittel zugesetzt wird, beträgt das Volumenverhältnis von inertem Lösungsmittel zu Dien in der Regel 0,5:1 bis 2:1, bevorzugt 0,7:1 bis 1,5:1, besonders bevorzugt 1:1.

Das Molverhältnis von n-Alkyllithium zu Dien beträgt in der Regel 1:1 bis 1:10, bevorzugt 1:1,2 bis 1:5 und besonders bevorzugt 1:1,5 bis 1:3.

Der wie zuvor beschrieben erhältliche, in dem erfindungsgemäßen Verfahren eingesetzte modifizierte Alkyllithium-Initiator sollte im Wesentlichen frei von monomerem Dien sein, d.h. die Konzentration von monomerem Dien in Bezug auf den Initiator beträgt in der Regel 0 bis 1.000 ppm, bevorzugt 0 bis 100 ppm, besonders bevorzugt 0 bis 10 ppm.

Der erhaltene modifizierte Alkyllithium-Initiator kann gegebenenfalls unter Inertgas zwischengelagert werden oder direkt für das erfindungsgemäße Verfahren eingesetzt werden. Für die Lagerung wird der Initiator z.B. durch Durchströmen eines Wärmetauschers im Anschluss an die Herstellung auf Temperaturen von bevorzugt unter 60°C gekühlt.

Die anionische Homo- bzw. Copolymerisation von Vinylaromat-Monomeren ist bekannt (siehe K. Knoll in Kunststoffhandbuch Polystyrol: Band 4, Gausepohl und Geliert Hrsg, Hanser Verlag, 1996, Seiten 145-160). Ebenfalls bekannt ist die Herstellung von Blockcopolymeren basierend auf Vinylaromat- und Dienmonomereinheiten durch sequentielle anionische Polymerisation (ebenda 161-164). Auf die vorgenannten Verfahren wird ausdrücklich verwiesen.

Gemäß dem erfindungsgemäßen Verfahren wird der modifizierte Alkyllithium-Initiator in einem inerten Lösungsmittel wie vorzugsweise Cyclohexan mit einem Vinylaromaten wie vorzugsweise Styrol bei Temperaturen von 0 bis 120°C, bevorzugt 20 bis 100°C, besonders bevorzugt 30 bis 90°C, insbesondere 35 bis 80°C und einem Druck von 0,3 bis 25 bar, bevorzugt 0,5 bis 5 bar, besonders bevorzugt 0,5 bis 2 bar umgesetzt.

Als Vinylaromaten eignen sich Styrol, α-Methylstyrol, o-, m-, p-substituierte Alkylstyrole Vinylnaphthalin und/oder 1,1-Diphenylethylen, bevorzugt Styrol, α-Methylstyrol, o-, m-, p-substituierte Alkylstyrole wie o-, m- und/oder p-Methylstyrol, besonders bevorzugt Styrol. Bei dem erfindungsgemäßen Verfahren können ein oder auch mehrere verschiedene Vinylaromaten eingesetzt werden.

In einer bevorzugten Ausführungsform kann der modifizierte Alkyllithium-Initiator unter den vorgenannten Bedingungen zu einer Mischung aus einem inerten Lösungsmittel wie Cyclohexan und einem Vinylaromaten wie vorzugsweise Styrol zugegeben werden. Dabei ist es auch möglich, den modifizierten Alkyllithium-Initiator direkt nach seiner Herstellung in noch warmem bzw. heißem Zustand zuzusetzen.

Durch das erfindungsgemäße Verfahren kann man engverteilte, lineare lebende, d.h. noch polymerisierbare, also aktive und somit reaktive Polymerketten des Vinylaromaten erhalten, die beispielsweise in einem folgenden Polymerisationsschritt mit einem Dien oder einem Gemisch aus einem Vinylaromaten wie Styrol und einem Dien zur Reaktion gebracht werden können.

Bevorzugt erfolgt die sequentielle anionische Polymerisation als Blockpolymerisation von einem Vinylaromaten und einem Dien.

Für die Blockpolymerisation geeignete Diene sind 1,3-Diene, bevorzugt 1,3-Butadien, Isopren, 2,3-Dimethylbutadien und/oder 1,3-Pentadien, besonders bevorzugt 1,3-Butadien und Isopren, ganz besonders bevorzugt 1,3-Butadien. Bei dem erfindungsgemäßen Verfahren können ein oder auch mehrere verschiedene Diene eingesetzt werden.

Bevorzugt erfolgt die sequentielle anionische Polymerisation als Blockpolymerisation von Styrol und 1,3-Butadien.

Ohne Zusatz eines Randomizers erhält man bei Zugabe eines Gemischs aus einem Vinylaromaten und einem Dien zu der lebenden Polymerkette einen Dienblock mit einem verschmierten Übergang zu einem weiteren vinylaromatischen Block. Als Randomizer können beispielsweise THF oder Kaliumalkoholate (z.B. Kaliumtertiäramylat) eingesetzt werden.

Durch Zusatz eines Randomizers kann man bei Zugabe eines Gemischs aus einem Vinylaromaten und einem Dien zu der lebenden Polymerkette einen statistischen Vinylaromat/Dien-Block erhalten. Wird bei dem erfindungsgemäßen Verfahren ein Randomizer vom Typ Kaliumalkoholat eingesetzt, liegt ein geeignetes Kalium-Lithium-Verhältnis, bevorzugt im Bereich von 1: 30 bis 1:40, besonders bevorzugt bei 1:37.

Die Anzahl, Länge, Abfolge und Zusammensetzung der Blöcke ist beliebig wählbar.

Besonders geeignet ist das erfindungsgemäße Verfahren zur Herstellung von Vinylaromat-Dien-Blockcopolymeren mit zumindest einem außenliegenden Vinylaromatblock.

Am Ende der Polymerisation kann entweder durch Zusatz eines Protonenspenders wie zum Beispiel von Alkoholen, bevorzugt Isopropanol, oder Wasser die Polymerkette protoniert und damit deaktiviert werden, oder aber durch Zugabe eines bi- oder oligofunktionellen Kopplungsmittels ein symmetrisches lineares Polymer mit doppelter Molmasse bzw. ein Sternpolymer erhalten werden. In einer weiteren Variante kann nach einem oder mehreren Polymerisationsschritten wiederum einmal oder mehrfach der modifizierte Alkyllithiuminitiator gefolgt von Monomer zugegeben werden, so dass man eine bi- oder oligomodale Molmassenverteilung erhält. Werden die lebenden Ketten mit einem oligofunktionellen Kopplungsmittel versetzt, erhält man unsymmetrische Sternpolymere.

Der modifizierte Alkyllithium-Initiator ist beispielsweise bei 60°C stabil und kann als Lösung unter Inertgasatmosphäre auch bis zur weiteren Verwendung gelagert werden.

Die mit Hilfe des erfindungsgemäß verwendeten Initiators hergestellten Vinylaromat-Homo- und Blockcopolymerisate sind im Allgemeinen transparent und können je nach Zusammensetzung elastomeres Verhalten oder eine zähsteife Mechanik aufweisen.

Weiterer Gegenstand der Erfindung ist die Verwendung von modifiziertem n-Alkylllithium enthaltend 1 bis 10, bevorzugt 1 bis 5, und besonders bevorzugt 1 bis 3, einpolymerisierte Monomereinheiten eines Diens als Initiator für die anionische Polymerisation von Vinylaromaten.

### Beispiele

### Verwendete Chemikalien:

### Styrol der Firma BASF SE

n-Butyllithium (12 Gew.-%) in Cyclohexan/n-Hexan Gemisch der Firma Chemetall Butadien der Firma BASF SE

Das Styrol entstammt der Styrol-Destillation der Styrolfabrik und wurde ohne weitere Reinigung eingesetzt, das Cyclohexan wurde bei Zimmertemperatur über eine Aluminiumoxid-Säule getrocknet und das Butadien wurde bei -10°C über Aluminiumoxid getrocknet und vom Stabilisator befreit.

Die GPC-Messungen erfolgten gemäß DIN 55672 unter Verwendung eines Brechungsindexdetektors ERC-RI-101.

Für jedes Beispiel bzw. Vergleichsbeispiel wurde ein simultan heiz- und kühlbarer 10 I Edelstahlautoklav, der mit einem Kreuzbalkenrüher ausgerüstet war, durch Spülen mit Stickstoff und Auskochen mit Cyclohexan/sec.-BuLi vorbereitet.

Dann wurde Cyclohexan eingefüllt und die in den jeweiligen Beispielen angegebenen Mengen an Initiator und Monomeren und gegebenenfalls weiterem Lösungsmittel zugesetzt.

Die Temperatur des Reaktionsgemisches wurde durch Heizung oder Kühlung des Reaktormantels gesteuert. Die weitere Aufarbeitung erfolgt nach den üblichen Verfahren. Nach Umsetzungsende wurde Isopropanol zur Protonierung der Carbanionen zugesetzt.

### Vergleichsbeispiel 1

Styrolpolymerisation mit n-BuLi; theoretische zahlenmittlere Molmasse des Styrolpolymerisats Mₙ = 50000 g/mol
4487 ml Cyclohexan wurden vorgelegt und auf 70°C erhitzt. Dann wurden 18,75 ml n-Butyllithium (1,6 M) zugegeben. Danach erfolgte über 30 Minuten die Zugabe von 1655 ml Styrol. Nach einer Nachreaktionszeit von 30 Minuten bis zur vollständigen Auspolymerisation, erfolgte anschließend die protische Terminierung der aktiven Kettenenden durch 1,5 ml Isopropanol.
Der Feststoffgehalt der Probe betrug 30 Gew.-%.

Die folgenden Daten wurden bei der GPC-Messung ermittelt:
Mₙ (Zahlenmittel): 46898 g/mol
M_{w} (Gewichtsmittel): 57113 g/mol
D (Dispersität): 1,22
Mₚ (Peakmaximum): 70528 g/mol
Das GPC-Diagramm zeigt eine bimodale Molmassenverteilung.

### Beispiel 1 (erfindungsgemäß)

Styrolpolymerisation mit modifiziertem n-Butyllithium-Initiator (n-BuLi umgesetzt mit 5 Äquivalenten Butadien zur Aktivierung), theoretische zahlenmittlere Molmasse des Styrolpolymerisats Mₙ = 50000 g/mol

1282 ml Cyclohexan wurden vorgelegt und auf 60°C erhitzt. Dann wurden 18,75 ml n-Butyllithium (1,6 M) und 12,4 ml Butadien (5 Äquivalente) zugegeben; diese ließ man 25 Minuten abreagieren, bevor weitere 3205 ml Cyclohexan zugesetzt und die Reaktionstemperatur zügig auf 70°C erhöht wurde. Danach erfolgte über 30 Minuten die Zugabe von 1655 ml Styrol. Nach einer Nachreaktionszeit von 30 Minuten bis zur vollständigen Auspolymerisation, erfolgte anschließend die protische Terminierung der aktiven Kettenenden durch 1,5 ml Isopropanol.
Der Feststoffgehalt der Probe betrug 30 Gew.-%.

Die folgenden Daten wurden bei der GPC-Messung ermittelt:
Mₙ (Zahlenmittel): 44858 g/mol
M_{w} (Gewichtsmittel): 51535 g/mol
D (Dispersität): 1,14
Mₚ (Peakmaximum): 52442 g/mol
Das GPC-Diagramm zeigt eine monomodale Verteilung.

### Vergleichsbeispiel 2

Styrolpolymerisation mit n-BuLi; theoretische zahlenmittlere Molmasse des Styrolpolymerisats Mn = 10000 g/mol
4487 ml Cyclohexan wurden vorgelegt und auf 35°C erhitzt. Dann wurden 93,8 ml n-Butyllithium (1,6 M) zugegeben. Danach erfolgte über 2 Minuten die Zugabe von 1655 ml Styrol, welches man adiabatisch polymerisieren und ausreagieren ließ. Die Maximaltemperatur betrug 96 °C. Danach erfolgte die protische Terminierung der aktiven Kettenenden durch 1,5 ml Isopropanol.
Der Feststoffgehalt der Probe betrug 30 Gew.-%.

Die folgenden Daten wurden bei der GPC-Messung ermittelt:
Mₙ (Zahlenmittel): 11770 g/mol
M_{w} (Gewichtsmittel): 19956 g/mol
D (Dispersität): 1,70
Mₚ (Peakmaximum): 26740 g/mol

### Beispiel 2 (erfindungsgemäß)

Styrolpolymerisation mit modifiziertem n-Butyllithium-Initiator (n-BuLi umgesetzt mit 10 Äquivalenten Butadien zur Aktivierung), theoretische zahlenmittlere Molmasse des Styrolpolymerisats Mn = 10000 g/mol
1282 ml Cyclohexan wurden vorgelegt und auf 75°C erhitzt. Dann wurden 93,8 ml n-Butyllithium (1,6 M) und 25 ml Butadien (10 Äquivalente) in 2 gleichen Portionen zugegeben, wobei die zweite Portion nach 15 Minuten hinzugegeben wurde; diese ließ man ca. 25 Minuten abreagieren, bevor weitere 3205 ml Cyclohexan zugesetzt und die Reaktionstemperatur zügig auf 40°C gekühlt wurde. Danach erfolgte über 2 Minuten die Zugabe von 1655 ml Styrol, welches man adiabatisch polymerisieren und ausreagieren ließ. Die Maximaltemperatur betrug 94 °C. Danach erfolgte die protische Terminierung der aktiven Kettenenden durch 1,5 ml Isopropanol.
Der Feststoffgehalt der Probe betrug 30 Gew.-%.

Die folgenden Daten wurden bei der GPC-Messung ermittelt:
Mₙ (Zahlenmittel): 10921 g/mol
M_{w} (Gewichtsmittel): 16808 g/mol
D (Dispersität): 1,54
Mₚ (Peakmaximum): 21188 g/mol

Fazit: Die Ergebnisse (Beispiele 1 und 2) zeigen, dass durch die Verwendung des modifizierten n-Butyllithium-Initiators Styrolpolymere mit deutlich engerer Verteilung erhalten werden als bei Verwendung von n-BuLi gemäß dem Stand der Technik.

## Patentansprüche

1. Verfahren zur Herstellung von Vinylaromat-Blockcopolymeren durch anionische Polymerisation, **dadurch gekennzeichnet, dass** zur Polymerisation eines Vinylaromaten ein modifizierter n-Alkyllithium-Initiator eingesetzt wird, welcher durch Umsetzung von n-Alkyllithium, gelöst in einem inerten Lösungsmittel, mit einem 1,3-Dien im Molverhältnis von 1:1 bis 1:10 bei einer Temperatur von -20 bis 100°C erhältlich ist.

2. Verfahren zur Herstellung von Vinylaromat- Blockcopolymeren gemäß Anspruch 1, **dadurch gekennzeichnet, dass** ein modifizierter n-Alkyllithium-Initiator, enthaltend 1 bis 5 einpolymerisierte Monomereinheiten eines Diens, eingesetzt wird.

3. Verfahren zur Herstellung von Vinylaromat Blockcopolymeren gemäß Anspruch 1, **dadurch gekennzeichnet, dass** ein modifizierter n-Alkyllithium-Initiator, enthaltend 1 bis 3 einpolymerisierte Monomereinheiten eines Diens, eingesetzt wird.

4. Verfahren gemäß einem der Ansprüche 1 bis 3, **dadurch gekennzeichnet, dass** ein modifizierter n-Butyllithium-initiator eingesetzt wird.

5. Verfahren gemäß einem der Ansprüche 1 bis 4, **dadurch gekennzeichnet, dass** die anionische Polymerisation sequentiell als Blockpolymerisation von einem Vinylaromaten und einem Dien durchgeführt wird, wobei in einem folgenden Polymerisationsschritt ein Dien oder ein Gemisch aus einem Vinylaromaten und einem Dien umgesetzt werden.

6. Verfahren gemäß einem der Ansprüche 1 bis 5, **dadurch gekennzeichnet, dass** als Vinylaromat Styrol und als Dien 1,3-Butadien eingesetzt wird.

7. Verwendung von modifiziertem n-Alkyllithium enthaltend 1 bis 10 einpolymerisierte Monomereinheiten eines 1,3-Diens als Initiator für die anionische Polymerisation von Vinylaromaten.

## Claims

1. A process for the production of vinylaromatic block copolymers via anionic polymerization, **characterized in that** the polymerization of a vinylaromatic uses a modified n-alkyllithium initiator which is obtainable via reaction, at a temperature of from -20 to 100°C, of n-alkyllithium, dissolved in an inert solvent, with a 1,3-diene in a molar ratio of from 1:1 to 1:10.

2. The process for the production of vinylaromatic block copolymers as claimed in claim 1, **characterized in that** a modified n-alkyllithium initiator is used which comprises from 1 to 5 monomer units of a diene polymerized into the molecule.

3. The process for the production of vinylaromatic block copolymers as claimed in claim 1, **characterized in that** a modified n-alkyllithium initiator is used which comprises from 1 to 3 monomer units of a diene polymerized into the molecule.

4. The process as claimed in any of claims 1 to 3, **characterized in that** a modified n-butyllithium initiator is used.

5. The process as claimed in any of claims 1 to 4, **characterized in that** the anionic polymerization is carried out sequentially as block polymerization of a vinylaromatic and a diene, where a polymerization step that follows comprises reaction of a diene or of a mixture of vinylaromatics and a diene.

6. The process as claimed in any of claims 1 to 5, **characterized in that** styrene is used as vinylaromatic and 1,3-butadiene is used as diene.

7. The use, as initiator for the anionic polymerization of vinylaromatics, of modified n-alkyllithium comprising from 1 to 10 monomer units of a 1,3-diene polymerized into the molecule.

## Revendications

1. Procédé de préparation de polymères à blocs vinylaromatiques par polymérisation anionique, **caractérisé en ce que**, pour la polymérisation d'un composé vinylaromatique, on utilise un amorceur n-alkyllithium modifié, qui peut être obtenu à une température de -20 à 100°C par réaction d'un n-alkyllithium, dissous dans un solvant inerte, avec un 1,3-diène selon un rapport en moles de 1:1 à 1:10.

2. Procédé de préparation de copolymères à blocs vinylaromatiques selon la revendication 1, **caractérisé en ce qu'**on utilise un amorceur n-alkyllithium modifié, contenant 1 à 5 unités monomères polymérisées d'un diène.

3. Procédé de préparation de copolymères à blocs vinylaromatiques selon la revendication 1, **caractérisé en ce qu'**on utilise un amorceur n-alkyllithium modifié, contenant 1 à 3 unités monomères polymérisées d'un diène.

4. Procédé selon l'une des revendications 1 à 3, **caractérisé en ce qu'**on utilise un amorceur n-butyllithium modifié.

5. Procédé selon l'une des revendications 1 à 4, **caractérisé en ce qu'**on met en oeuvre la polymérisation anionique d'une manière séquentielle sous forme d'une polymérisation par blocs d'un composé vinylaromatique et d'un diène, un diène ou un mélange d'un composé vinylaromatique et d'un diène étant mis à réagir dans une étape de polymérisation subséquente.

6. Procédé selon l'une des revendications 1 à 5, **caractérisé en ce qu'**on utilise en tant que composé vinylaromatique du styrène et en tant que diène du 1,3-butadiène.

7. Utilisation d'un n-alkyllithium modifié, contenant 1 à 10 unités monomères polymérisées d'un 1,3-diène, en tant qu'amorceur pour la polymérisation anionique de composés vinylaromatiques.
